# FASCICULE DE BREVET EUROPEEN

(11) **EP 3 818 103 B1**
(45) Date de publication et mention de la délivrance du brevet: **21.09.2022**
(21) Numéro de dépôt: 19753414.2
(22) Date de dépôt: 28.06.2019
(51) Int. Cl.: C08L 7/00, B60C 1/00

(54) **COMPOSITION DE CAOUTCHOUC À BASE DE RÉSINE ÉPOXYDE ET D'UN DÉRIVÉ D'AMINOBENZOATE.**
KAUTSCHUKMISCHUNG MIT EINEM EPOXYDHARZ UND EIN AMBINOBENZOATDERIVAT
RUBBER COMPOSITION COMPRISING AN EPOXY RESIN AND AN AMINOBENZOATE DERIVATIVE

(30) Priorité: 02.07.2018 FR 1856074
(43) Date de publication de la demande: 12.05.2021
(73) Titulaire: COMPAGNIE GENERALE DES ETABLISSEMENTS MICHELIN, 63000 Clermont-Ferrand (FR)
(72) Inventeur: BELIN, Lionel, 63040 CLERMONT-FERRAND Cedex 9 (FR); BONNETTE, Fabien, 63040 CLERMONT-FERRAND Cedex 9 (FR); LANDREAU, Emmanuel, 63040 CLERMONT-FERRAND Cedex 9 (FR); LAUBRY, Philippe, 63040 CLERMONT-FERRAND Cedex 9 (FR)
(74) Mandataire: Louret, Sylvain
(86) Numéro de dépôt international: PCT/FR2019/051608
(87) Numéro de publication internationale: WO 2020/008130

(56) Documents cités:
- EP-A2- 0 133 281
- WO-A1-2014/095588
- FR-A1- 2 951 182
- US-A- 4 562 217

## Description

### DOMAINE DE L'INVENTION

La présente invention est relative à des compositions de caoutchouc destinées notamment à la fabrication de pneumatiques ou de produits semi-finis pour pneumatiques. La présente invention a également pour objet un article de caoutchouc fini ou semi-fini comportant une composition de caoutchouc selon l'invention, ainsi qu'un pneumatique comprenant au moins une composition selon l'invention.

### ÉTAT DE L'ART

Il est connu d'utiliser dans certaines parties des pneumatiques, des compositions de caoutchouc présentant une forte rigidité lors de faibles déformations du pneumatique comme présenté dans la demande WO 02/10269. La résistance aux faibles déformations est une des propriétés que doit présenter un pneumatique pour répondre aux sollicitations auxquelles il est soumis.

Cette rigidification peut être obtenue en augmentant le taux de charge renforçante ou en incorporant certaines résines renforçantes dans les compositions de caoutchouc constitutives des parties du pneumatique.

Les résines renforçantes classiquement utilisées pour augmenter la rigidité des compositions sont des résines renforçantes à base d'un système accepteur/donneur de méthylène. Les termes « accepteur de méthylène » et « donneur de méthylène » sont bien connus de l'homme du métier et largement utilisés pour désigner des composés aptes à réagir ensemble pour générer par condensation une résine renforçante tridimensionnelle qui vient se superposer, s'interpénétrer avec le réseau charge renforçante/élastomère d'une part, avec le réseau élastomère/soufre d'autre part (si l'agent de réticulation est le soufre). A l'accepteur de méthylène précédemment décrit est associé un agent durcisseur, apte à le réticuler ou durcir, encore appelé communément « donneur de méthylène ». La réticulation de la résine est alors provoquée lors de la cuisson de la matrice de caoutchouc, par formation de ponts méthylène entre les carbones en positions ortho et para des noyaux phénoliques de la résine et le donneur de méthylène, créant ainsi un réseau de résine tridimensionnel.

Classiquement, l'accepteur de méthylène est une résine phénolique. Des résines phénoliques novolaques, ont déjà été décrites dans des compositions de caoutchouc, notamment destinées à des pneumatiques ou des bandes de roulement de pneumatiques, pour des applications aussi variées qu'adhésion ou renforcement : on se reportera par exemple au brevet EP 0 649 446. Par ailleurs, les donneurs de méthylène classiquement utilisés sont de l'hexa-méthylènetétramine (en abrégé HMT), ou l'hexaméthoxyméthylmélamine (en abrégé HMMM ou H3M), ou l'hexaéthoxyméthylmélamine.

Toutefois, la combinaison d'une résine phénolique, accepteur de méthylène avec l'HMT ou l'H3M donneur de méthylène, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental potentiel de ces composés.

A cet effet, des compositions alternatives aux compositions comprenant le couple résine formo-phénolique accepteur de méthylène avec un durcisseur HMT ou H3M donneur de méthylène classiques ont été développées. A titre d'exemple, la demande WO 2011/045342 décrit des compositions comprenant une couple résine époxyde avec un durcisseur aminé. Ces compositions, outre l'avantage de s'affranchir de la formation de formaldéhyde, présentent après réticulation des rigidités supérieures aux compositions conventionnelles tout en conservant une résistance au roulement acceptable. La demande WO 2018/002538 décrit des compositions comprenant une résine époxyde et un durcisseur aminé qui vise à améliorer le compromis processabilité (en particulier le temps de grillage) / rigidité par rapport aux compositions connues.

Toutefois, il est toujours souhaitable d'améliorer les propriétés à cru de ces compositions, notamment leur processabilité, de manière à faciliter leur production et ainsi réduire les coûts globaux de production, tout en maintenant un bon niveau de rigidité des compositions.

De manière inattendue, la Demanderesse a découvert lors de ses recherches que la combinaison d'un dérivé d'aminobenzoate particulier avec une résine époxyde permet d'améliorer la processabilité des compositions de caoutchouc avant cuisson (à cru), notamment le temps de grillage ou la viscosité de ces compositions, par rapport aux compositions utilisées à ce jour, tout en maintenant, voire améliorant les propriétés de rigidité à cuit. Ainsi, les compositions conformes à la présente invention présentent un compromis processabilité / rigidité bien supérieur à celui des compositions connues.

### DÉFINITIONS

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on décrit un intervalle de valeurs par l'expression "de a à b", on décrit également et préférentiellement l'intervalle représenté par l'expression "entre a et b".

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### DESCRIPTION DE L'INVENTION

L'invention concerne au moins l'une des réalisations suivantes :
**1.** Composition de caoutchouc à base d'au moins :
   - un élastomère diénique,
   - une charge renforçante,
   - un système de réticulation,
   - de 1 à 30 parties en poids pour cent parties en poids d'élastomère, pce, d'une résine époxyde, et
   - de 0,5 à 15 pce d'un dérivé d'aminobenzoate répondant à la formule (I) : 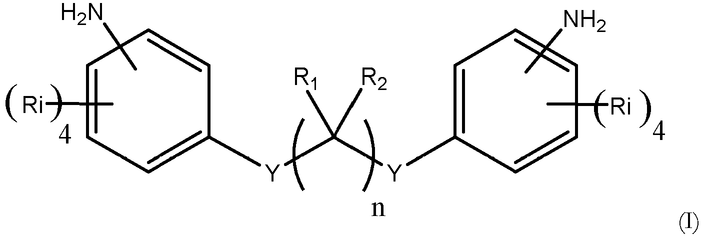 dans laquelle :
   - n représente un entier allant de 1 à 5,
   - Y représente une fonction ester,
   - R₁ et R₂, identiques ou différents, sont choisis dans le groupe constitué par un atome d'hydrogène et un groupement méthyle, éthyle, propyle, butyle, isopropyle, isobutyle, terbutyle ou benzyle,
   - les groupes Ri, identiques ou différents, sont choisis dans le groupe constitué par un atome d'hydrogène et les radicaux alkyles linéaires ou ramifiés en C₁-C₆.
**2.** Composition de caoutchouc selon la réalisation 1, dans laquelle le dérivé d'aminobenzoate répond à la formule (II) ou (III) : 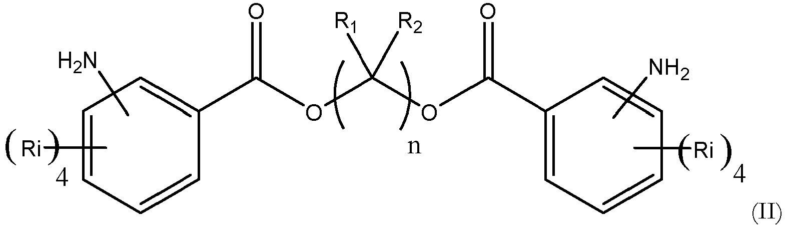 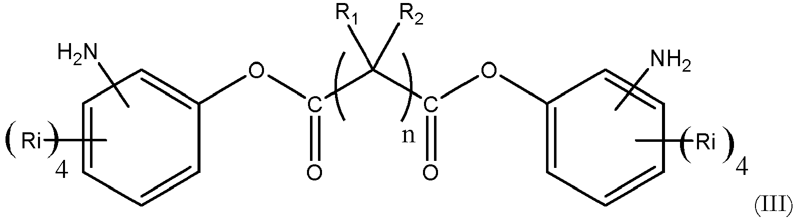
**3.** Composition de caoutchouc selon la réalisation 1, dans laquelle le dérivé d'aminobenzoate répond à la formule (IV) : 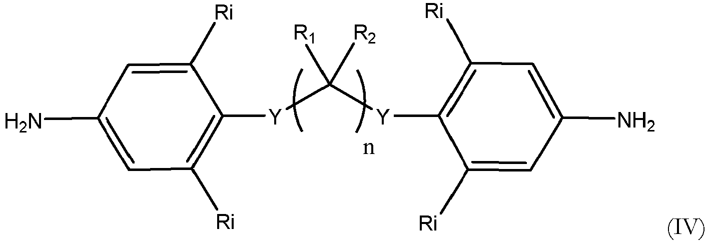
**4.** Composition de caoutchouc selon l'une quelconque des réalisations 1 à 3, dans laquelle le dérivé d'aminobenzoate répond à la formule (V) ou (VI) : 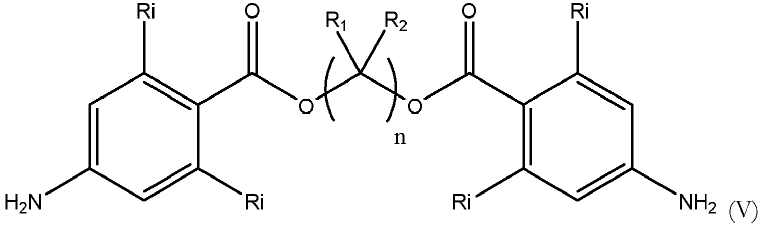 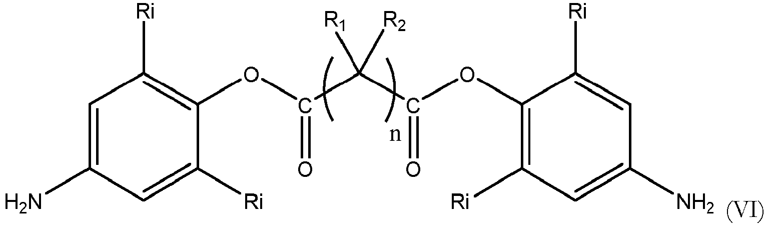
**5.** Composition de caoutchouc selon l'une quelconque des réalisations 1 à 4, dans laquelle les radicaux alkyles linéaires ou ramifiés en C₁-C₆ des groupes Ri sont, indépendamment les uns des autres, choisis dans le groupe constitué par les radicaux méthyle, éthyle, propyle, isopropyle, isobutyle et butyle, de préférence dans le groupe constitué par les radicaux méthyle et éthyle.
**6.** Composition de caoutchouc selon l'une quelconque des réalisations 1 à 4, dans laquelle tous les groupes Ri sont des atomes d'hydrogène.
**7.** Composition de caoutchouc selon l'une quelconque des réalisations 1 à 6, dans laquelle n représente un entier allant de 2 à 4.
**8.** Composition de caoutchouc selon l'une quelconque des réalisations 1 à 7, dans laquelle R₁ et R₂, identiques ou différents, sont choisis dans le groupe constitué par un atome d'hydrogène et un groupement méthyle ou éthyle.
**9.** Composition de caoutchouc selon l'une quelconque des réalisations 1 à 8, dans laquelle R₁ et R₂ sont des atomes d'hydrogène.
**10.** Composition de caoutchouc selon la réalisation 1, dans laquelle le dérivé d'aminobenzoate est choisi dans le groupe constitué par le triméthylène bis(4-aminobenzoate) ; le 1,5-pentanediol, 3,3-diméthyl-, 1,5-bis(4-aminobenzoate) ; le 1,3-hexanediol, 2-éthyl-, 1,3-bis(4-aminobenzoate) ; le 1,3-butanediol, 1,3-bis(4-aminobenzoate) ; le 1,3-propanediol, 2-méthyl-, 1,3-bis(4-aminobenzoate) ; le 1,3-propanediol, 2,2-diéthyl-, 1,3-bis(4-aminobenzoate) ; le 2,4-pentanediol, 2,4-bis(4-aminobenzoate) ; le 1,2-propanediol, 1,2-bis(4-aminobenzoate) ; le 1,4-butanediol, 1,4-bis(4-aminobenzoate) ; le 1,3-propanediol, 2,2-diméthyl-, 1,3-bis(4-aminobenzoate) ; le 1,2-éthanediol, 1,2-bis(4-aminobenzoate) et leurs mélanges.
**11.** Composition de caoutchouc selon la réalisation 10, dans laquelle le dérivé d'aminobenzoate est choisi dans le groupe constitué par le triméthylène bis(4-aminobenzoate) ; le 1,4-butanediol, 1,4-bis(4-aminobenzoate) ; le 1,2-éthanediol, 1,2-bis(4-aminobenzoate) et leurs mélanges.
**12.** Composition de caoutchouc selon l'une quelconque des réalisations 1 à 11, dans laquelle le taux de dérivé d'aminobenzoate est compris dans un domaine allant de 1 à 10 pce, de préférence de 2 à 8 pce.
**13.** Composition de caoutchouc selon l'une quelconque des réalisations 1 à 12, dans laquelle l'élastomère est choisi dans le groupe constitué par le caoutchouc naturel, les polyisoprènes de synthèse, les polybutadiènes, les copolymères de butadiène, les copolymères d'isoprène et les mélanges de ces élastomères.
**14.** Composition de caoutchouc selon l'une quelconque des réalisations 1 à 13, dans laquelle la résine époxyde est choisie parmi les résines époxydes aromatiques, époxydes alicycliques et époxydes aliphatiques.
**15.** Composition de caoutchouc selon la réalisation 14, dans laquelle la résine époxyde est choisie parmi les résines époxydes novolaques crésol.
**16.** Composition de caoutchouc selon l'une quelconque des réalisations 1 à 13, dans laquelle la résine époxyde est choisie dans le groupe constitué par le 2,2 bis[4-(glycidyloxy) phényl] propane, le poly[(o-crésylglycidyl éther)-co-formaldéhyde], le poly[(phénylglycidyl éther)-co-formaldéhyde], le poly[(phenylglycidyl éther)-co(hydroxybenzaldehyde glycidyl éther)] et le mélanges de ces composés.
**17.** Composition de caoutchouc selon l'une quelconque des réalisations 1 à 16, dans laquelle le taux de résine époxyde est compris entre 10 et 25 pce, de préférence entre 15 et 20 pce.
**18.** Composition de caoutchouc selon l'une quelconque des réalisations précédentes, dans laquelle la charge renforçante comporte du noir de carbone, une charge inorganique renforçante ou un mélange de noir de carbone et de charge inorganique renforçante, de préférence la charge renforçante comporte majoritairement du noir de carbone.
**19.** Composition de caoutchouc selon l'une quelconque des réalisations précédentes, dans laquelle le taux de charge renforçante est compris dans un domaine allant de 20 à 200 pce, de préférence de 30 à 150 pce.
**20.** Article de caoutchouc fini ou semi-fini comportant une composition de caoutchouc selon l'une quelconque des réalisations précédentes.
**21.** Pneumatique comportant une composition de caoutchouc selon l'une quelconque des réalisations 1 à 19 ou un article de caoutchouc semi-fini selon la réalisation 20.
**22.** Pneumatique selon la réalisation 21, dans lequel la composition de caoutchouc selon l'une quelconque des réalisations 1 à 19 est présente dans au moins une couche interne.
**23.** Pneumatique selon la réalisation 22, dans lequel la couche interne est choisie dans le groupe constitué les nappes carcasse, les nappes sommet, les bourrages-tringle, les pieds sommets, les couches de découplage, les gommes de bordure, les gommes de bourrage, la sous-couche de bande de roulement et les combinaisons de ces couches internes.

### Elastomère diénique

La composition selon l'invention comprend au moins un élastomère diénique. Elle peut donc contenir un seul élastomère diénique ou un mélange de plusieurs élastomères diéniques.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Les élastomères diéniques compris dans la composition selon l'invention sont préférentiellement essentiellement insaturés.

On entend particulièrement par élastomère diénique susceptible d'être utilisé dans les compositions conformes à l'invention :
(a) tout homopolymère d'un monomère diène, conjugué ou non, ayant de 4 à 18 atomes de carbone ;
(b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

A titre d'α-monooléfines aliphatiques conviennent notamment les α-monooléfines aliphatiques acycliques ayant de 3 à 18 atomes de carbone.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

De manière préférée, l'élastomère diénique est un élastomère isoprénique.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Préférentiellement le taux d'élastomère diénique, de préférence d'élastomère isoprénique, de préférence le caoutchouc naturel, est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

Qu'elle contienne un seul élastomère diénique ou un mélange de plusieurs élastomères diéniques, la composition de caoutchouc selon l'invention peut également contenir de manière minoritaire tout type d'élastomère synthétique autre que diénique, voire des polymères autres que des élastomères, par exemple des polymères thermoplastiques. De préférence, la composition de caoutchouc selon l'invention ne contient pas d'élastomère synthétique autre que diénique ni de polymère autre que des élastomères ou en contient moins de 10 pce, de préférence moins de 5 pce.

### Résine époxyde

La composition selon l'invention comprend entre 1 et 30 pce d'une résine époxyde.

Les résines époxydes utilisables dans la présente invention incluent tous les composés polyépoxydes. Il peut s'agir par exemple des résines époxydes aromatiques, époxydes alicycliques, et époxydes aliphatiques. Par exemple, la résine époxyde aromatique peut être une résine époxyde amine-aromatique. Ces résines sont préférentiellement des résines époxydes novolaques, c'est-à-dire des résines époxydes obtenues par catalyse acide, par opposition aux résines résols, obtenues par catalyse basique. De manière préférée, ces résines sont des résines époxydes novolaques crésol.

En particulier parmi les composés époxydes aromatiques, sont préférées les résines époxydes choisies dans le groupe constitué par le 2,2 bis[4-(glycidyloxy) phényl] propane, le poly[(o-crésylglycidyl éther)-co-formaldéhyde], le poly[(phénylglycidyl éther)-co-formaldéhyde], le poly[(phenylglycidyl éther)-co(hydroxybenzaldehyde glycidyl éther)] et le mélanges de ces composés.

De préférence encore, la résine époxyde est choisie dans le groupe constitué par le poly[o-crésylglycidyl éther)-co-formaldéhyde], le poly[o-phénylglycidyl éther)-co-formaldéhyde], les résines époxyde amine aromatique et le mélanges de ces composés.

A titre d'exemple de résines époxydes disponibles dans le commerce et utilisables dans le cadre de la présente invention, on peut citer par exemple la résine époxyde « DEN 439 » de la société Uniqema, la résine époxyde « Tris(4-hydroxyphenyl)methane triglycidyl ether » de la société Sigma-Aldrich, la résine époxy crésol novolaque araldite ECN 1299 de la société Hunstman.

La quantité de résine époxyde est comprise entre 1 et 30 pce. Compte tenu du dérivé d'aminobenzoate utilisé dans le cadre de la présente invention, en dessous du taux minimum de résine indiqué, l'effet technique visé est insuffisant, alors qu'au-delà du maximum indiqué, on s'expose à des risques d'augmentation trop importante de la rigidité et de pénalisation excessive de l'hystérèse et de la plasticité Mooney. Pour toutes ces raisons, le taux de résine époxyde est comprise entre 10 et 25 pce. De préférence encore, le taux de résine époxyde dans la composition selon l'invention est compris entre 15 et 20 pce.

### Dérivé d'aminobenzoate

La composition de caoutchouc selon l'invention comprend en outre de 0,5 à 15 pce d'un dérivé d'aminobenzoate répondant à la formule (I) : 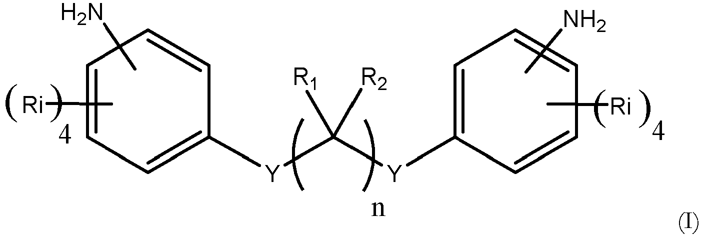 dans laquelle :
- n représente un entier allant de 1 à 5,
- Y représente une fonction ester,
- R₁ et R₂, identiques ou différents, sont choisis dans le groupe constitué par un atome d'hydrogène et un groupement méthyle, éthyle, propyle, butyle, isopropyle, isobutyle, terbutyle ou benzyle,
- les groupes Ri, identiques ou différents, sont choisis dans le groupe constitué par un atome d'hydrogène et les radicaux alkyles linéaires ou ramifiés en C₁-C₆.

Dans le cadre de la présente invention, ces dérivés d'aminobenzoate permettent de réticuler la résine dans les conditions appropriées, en particulier lors de la cuisson.

De référence, le dérivé d'aminobenzoate répond à la formule (II) ou (III) : 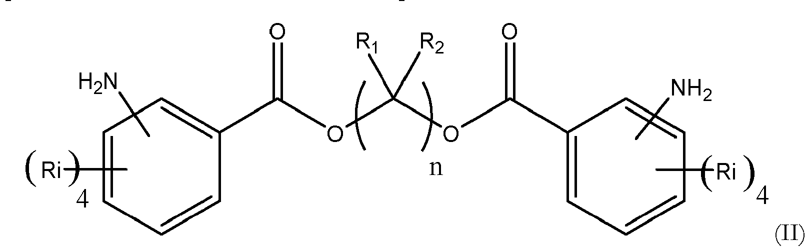 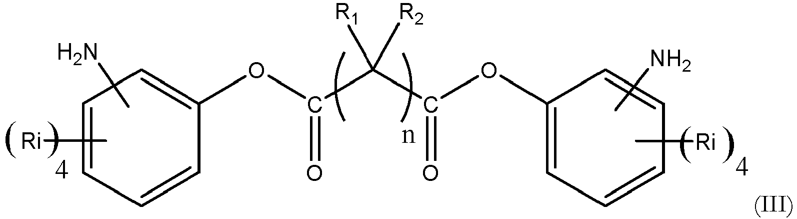 dans laquelle n, R₁ et R₂ et les groupes Ri sont tels que définis ci-dessus.

De manière préférée, le dérivé d'aminobenzoate répond à la formule (II) dans la quelle n, R₁ et R₂ et les groupes Ri sont tels que définis ci-dessus.

De manière préférée, le dérivé d'aminobenzoate répond à l'une des formules (I), (II) ou (III) dans laquelle, pour chacun des cycles aromatiques du dérivé d'aminobenzoate, au moins deux des groupes Ri situés en ortho ou para de la fonction amine primaire sont un atome d'hydrogène.

Le dérivé d'aminobenzoate peut répondre à la formule (IV) : 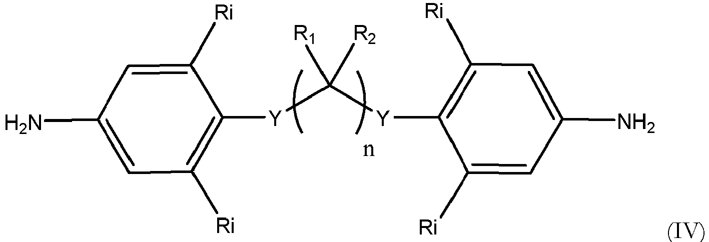 dans laquelle n, R₁ et R₂ et les groupes Ri sont tels que définis ci-dessus.

De préférence, le dérivé d'aminobenzoate répond à la formule (V) ou (VI) : 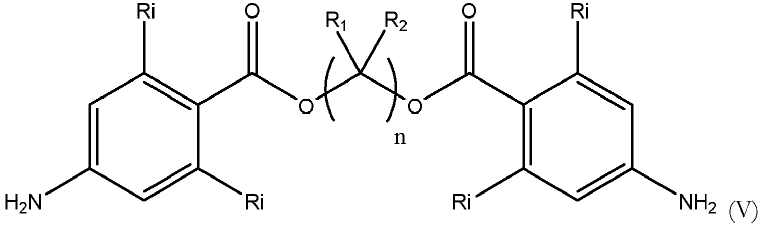 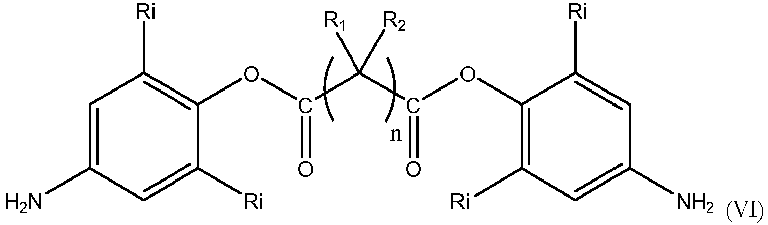 dans laquelle n, R₁ et R₂ et les groupes Ri sont tels que définis ci-dessus.

De manière particulièrement avantageuse, le dérivé d'aminobenzoate répond à la formule (V) dans la quelle n, R₁ et R₂ et les groupes Ri sont tels que définis ci-dessus.

Quelle que soit la formule (I) à (VI) du dérivé d'aminobenzoate, de manière préférentielle, les groupes Ri, identiques ou différents, sont choisis dans le groupe constitué par un atome d'hydrogène et les radicaux alkyles linéaires ou ramifiés en C₁-C₆. Les radicaux alkyles linéaires ou ramifiés en C₁-C₆ des groupes Ri peuvent, indépendamment les uns des autres, être choisis dans le groupe comprenant ou constitué par les radicaux méthyle, éthyle, propyle, isopropyle, isobutyle et butyle, de préférence dans le groupe constitué par les radicaux méthyle et éthyle. De préférence encore, tous les groupes Ri sont des atomes d'hydrogène.

Quelle que soit la formule (I) à (VI) du dérivé d'aminobenzoate, de préférence également, n représente un entier allant de 2 à 4.

Quelle que soit la formule (I) à (VI) du dérivé d'aminobenzoate, selon l'invention, R₁ et R₂, identiques ou différents, sont préférentiellement choisis dans le groupe comprenant ou constitué par un atome d'hydrogène et un groupement méthyle, éthyle, isobutyle ou benzyle, de préférence encore dans le groupe comprenant ou constitué par un atome d'hydrogène et un groupement méthyle ou éthyle. De préférence encore, R₁ et R₂ sont des atomes d'hydrogène.

Lorsque le dérivé d'aminobenzoate répond à la formule (I), (II), (IV) ou (V), il est avantageusement choisi dans le groupe comprenant ou constitué par le triméthylène bis(4-aminobenzoate) ; le 1,5-pentanediol, 3,3-diméthyl-, 1,5-bis(4-aminobenzoate) ; le 1,3-hexanediol, 2-éthyl-, 1,3-bis(4-aminobenzoate) ; le 1,3-butanediol, 1,3-bis(4-aminobenzoate) ; le 1,3-propanediol, 2-méthyl-, 1,3-bis(4-aminobenzoate) ; le 1,3-propanediol, 2,2-diéthyl-, 1,3-bis(4-ammobenzoate) ; le 2,4-pentanediol, 2,4-bis(4-aminobenzoate) ; le 1,2-propanediol, 1,2-bis(4-aminobenzoate) ; le 1,4-butanediol, 1,4-bis(4-aminobenzoate) ; le 1,3-propanediol, 2,2-diméthyl-, 1,3-bis(4-aminobenzoate) ; le 1,2-éthanediol, 1,2-bis(4-aminobenzoate) et leurs mélanges, de préférence choisi dans le groupe constitué par le triméthylène bis(4-aminobenzoate) ; le 1,3-hexanediol, 2-éthyl-, 1,3-bis(4-aminobenzoate) ; le 1,3-butanediol, 1,3-bis(4-aminobenzoate) ; le 1,3-propanediol, 2-méthyl-, 1,3-bis(4-aminobenzoate) ; le 1,3-propanediol, 2,2-diéthyl-, 1,3-bis(4-aminobenzoate) ; le 2,4-pentanediol, 2,4-bis(4-aminobenzoate) ; le 1,2-propanediol, 1,2-bis(4-aminobenzoate) ; le 1,4-butanediol, 1,4-bis(4-aminobenzoate) ; le 1,3-propanediol, 2,2-diméthyl-, 1,3-bis(4-aminobenzoate) ; le 1,2-éthanediol, 1,2-bis(4-aminobenzoate) et leurs mélanges.

Lorsque le dérivé d'aminobenzoate répond à la formule (I), (II), (IV) ou (V) et que R₁ et R₂ sont des atomes d'hydrogène, le dérivé d'aminobenzoate est avantageusement choisi dans le groupe comprenant ou constitué par le triméthylène bis(4-aminobenzoate) ; le 1,4-butanediol, 1,4-bis(4-aminobenzoate) ; le 1,2-éthanediol, 1,2-bis(4-aminobenzoate) et leurs mélanges. De manière particulièrement avantageuse, le dérivé d'aminobenzoate est le triméthylène bis (4-aminobenzoate).

Par ailleurs, à titre d'exemple de composés répondant aux formule (III) et (VI), on peut citer l'acide butanedioïque ; le 1,4-bis(4-aminophényle) ester ; l'acide pentanedioïque ; le 1,5-bis(4-aminophényle) ester ; l'acide hexanedioïque et le 1,6-bis(4-aminophényle) ester.

Des composés répondant aux formules (I) à (VI) sont disponibles dans le commerce. Par exemple, le triméthylène bis(4-aminobenzoate) qui répond à la formule (VII) ci-dessous est disponible sous la dénomination « Versalink 740 M » auprès de la société Air Product :

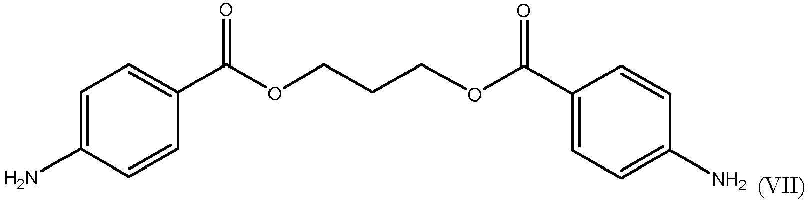

De tels composés peuvent également être obtenus en suivant les protocoles décrits dans les documents Rao et al., European Polymer Journal (2016), 77, 139-154 ; Saif Ullah Khan et al., Journal of Organometallic Chemistry (2013), 745-746, 312-328 ; ou dans les documents US 2014/0142199 et WO 2001/093823, par exemple.

Selon l'invention, le taux de dérivé d'aminobenzoate est compris dans un domaine allant de 0,5 à 15 pce. En dessous du minimum indiqué, l'effet technique visé s'est révélé insuffisant, alors qu'au- delà du maximum indiqué, la rigidité est pénalisée. De préférence, le taux de dérivé d'aminobenzoate est compris dans un domaine allant de 1 à 10 pce, de préférence de 2 à 8 pce, de préférence encore de 3 à 5 pce.

### Charge renforçante

La composition du pneumatique selon l'invention comprend avantageusement une charge renforçante.

La charge renforçante peut comprendre tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou un mélange de de noir de carbone et de charge inorganique renforçante. Plus préférentiellement, la charge renforçante comprend majoritairement, voire exclusivement, du noir de carbone, en particulier dans le cas où la composition est utilisée dans une couche interne. La charge renforçante peut également comprendre majoritairement une charge inorganique renforçante, en particulier dans le cas où la composition est utilisée dans une bande de roulement.

Une telle charge renforçante consiste typiquement en des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçant des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0,1 à 0,3].

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17). La surface spécifique CTAB de la silice est déterminée selon la norme française NF T 45-007 de novembre 1987 (méthode B).

Conviennent également comme charges inorganiques renforçantes les charges minérales du type alumineuse, en particulier de l'alumine (Al₂O₃) ou des (oxyde)hydroxydes d'aluminium, ou encore des oxydes de titane renforçants, par exemple décrits dans US 6,610,261 et US 6,747,087.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6 849 754, WO 99/09036, WO 2006/023815, WO 2007/098080, WO 2010/072685 et WO 2008/055986.

La teneur en agent de couplage est avantageusement inférieure à 12 pce, étant entendu qu'il est en général souhaitable d'en utiliser le moins possible. Typiquement lorsque qu'une charge inorganique renforçante est présente, le taux d'agent de couplage représente de 0,5% à 15% en poids par rapport à la quantité de charge inorganique. Son taux est préférentiellement compris dans un domaine allant de 0,5 à 12 pce, plus préférentiellement compris dans un domaine allant de 4 à 8 pce. Ce taux est aisément ajusté par l'homme du métier selon le taux de charge inorganique utilisé dans la composition.

De façon préférée, la composition selon l'invention est dépourvue de charge inorganique renforçante. Par composition dépourvue d'un composé, on comprend que la composition ne comprend pas de ce composé introduit volontairement dans la composition et que ce composé, s'il est présent, l'est sous forme de traces liées par exemple à son procédé de fabrication. Par exemple, la composition dépourvue de ce composé comprend une quantité inférieure ou égale à 0,1 pce et de préférence inférieure ou égale à 0,05 pce.

Selon l'invention, lorsque la charge renforçante est présente, le taux de charge renforçante, de préférence la charge renforçante comprenant majoritairement, voire exclusivement du noir de carbone, peut être compris dans un domaine allant de 20 à 200 pce, de préférence de 30 à 150 pce, de préférence de 40 à 100 pce, de préférence de 50 à 80 pce.

### Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

Les compositions de caoutchouc conformes à l'invention peuvent également comporter tout ou partie des additifs usuels habituellement utilisés dans les compositions d'élastomères, comme par exemple des pigments, des agents de protection tels que cires anti-ozone, anti-ozonants chimiques, anti-oxydants, agents plastifiants, des agents anti-fatigue.

Lorsque la composition selon l'invention est une composition de couche interne de pneumatique, elle est avantageusement dépourvue d'agent anti-oxydant.

Lorsque la composition selon l'invention est une composition de couche interne de pneumatique, elle peut être dépourvue d'agent plastifiant ou en contenir moins de 5 pce, de préférence moins de 1 pce. De manière alternative et selon un mode de réalisation également préférentiel, la composition selon l'invention comporte en outre un agent plastifiant. De préférence cet agent plastifiant est une résine hydrocarbonée solide (ou résine plastifiante), une huile d'extension (ou huile plastifiante), ou un mélange des deux.

Par ailleurs, la composition selon l'invention peut comprendre un sel de cobalt, en particulier dans le cas où elle est utilisée dans une couche interne. Ainsi, de préférence, la composition selon l'invention comprend un sel de cobalt, de préférence choisi dans le groupe constitué par les abiétates, les acétylacétonates, les tallates, les naphténates, les résinâtes et les mélanges de ces composés. Le taux en sel de cobalt peut être par exemple, compris entre 0,1 et 6 pce, par exemple entre 0,3 et 4 pce, par exemple entre 0,5 et 2,5 pce.

### Article de caoutchouc fini ou semi-fini et pneumatique

La présente invention a également pour objet un article de caoutchouc fini ou semi-fini comportant une composition selon l'invention.

La présente invention a également pour objet un pneumatique qui comprend une composition selon l'invention.

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux bandes de roulement et aux couches internes des pneumatiques.

Selon l'invention, la couche interne peut être choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

L'invention concerne les articles comprenant une composition de caoutchouc selon l'invention, tant à l'état cru (c'est à dire, avant cuisson) qu'à l'état cuit (c'est à dire, après réticulation ou vulcanisation).

### Préparation des compositions de caoutchouc

La composition de caoutchouc conforme à l'invention peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, à l'exception du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La phase non-productive est réalisée à haute température, jusqu'à une température maximale comprise entre 110°C et 190°C, de préférence entre 130°C et 180°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 110°C, par exemple entre 40°C et 100°C. On incorpore alors le système de réticulation, et le tout est alors mélangé pendant quelques minutes, par exemple entre 2 et 15 min.

Le procédé pour préparer de telles compositions comporte par exemple les étapes suivantes :
a) incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
b) refroidir l'ensemble à une température inférieure à 100°C ;
c) incorporer ensuite, au cours d'une seconde étape (dite "productive"), un système de réticulation ;
d) malaxer le tout jusqu'à une température maximale inférieure à 110°C.

Entre 1 et 30 pce de la résine époxyde, et entre 0,5 et 15 pce d'un dérivé d'aminobenzoate de formule (I) peuvent être introduits, indépendamment l'un des autres, soit durant la phase non-productive (a), soit durant la phase productive (c). De préférence, la résine époxyde est introduite durant la phase non-productive (a) et le dérivé d'aminobenzoate est introduit lors de la phase productive (c).

La composition finale ainsi obtenue peut ensuite être calandrée, par exemple sous la forme d'une feuille, d'une plaque notamment pour une caractérisation au laboratoire, ou encore extrudée sous la forme d'un semi-fini (ou profilé) de caoutchouc utilisé pour la fabrication d'un pneumatique.

La composition peut être soit à l'état cru (avant réticulation ou vulcanisation), soit à l'état cuit (après réticulation ou vulcanisation), peut être un produit semi-fini qui peut être utilisé dans un pneumatique.

### EXEMPLES

### Mesures et tests utilisés

### • Temps de grillage

Les mesures sont effectuées à 130°C ou 115°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'une grand rotor), exprimé en minutes, et défini comme étant le temps nécessaire pour obtenir une augmentation de l'indice consistométrique (exprimée en UM) de 5 unités au-dessus de la valeur minimale mesurée pour cet indice.

On rappelle que, de manière bien connue de l'homme du métier, plus le temps de grillage est élevé, plus la réticulation du matériau sera retardée avant cuisson.

### • Plasticité Mooney

On utilise un consistomètre oscillant tel que décrit dans la norme française NF T 43-005 (1991). La mesure de plasticité Mooney se fait selon le principe suivant : la composition à l'état cru (*i.e.*, avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=O, 83 Newton.mètre).

On rappelle que, de manière bien connue de l'homme du métier, plus la plasticité Mooney est faible, plus le matériau est facile à travailler. Bien entendu, en-deçà d'une certaine valeur (*e.g.*, 20 UM, le matériau devient trop liquide pour être utilisable, notamment pour fabriquer des couches internes).

### • Propriétés dynamiques

Les propriétés dynamiques G^{∗}(2%) sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique G^{∗}. Pour le cycle retour, on indique le module complexe de cisaillement dynamique G^{∗}(2%) à 2% de déformation, à 40°C.

On rappelle que la valeur de G^{∗}(2%) retour à 40°C est représentative de la rigidité du matériau : plus G^{∗}(2%) à 40°C est élevé, plus le matériau est rigide.

### • Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante, entre 1 et 30 pce de la résine époxyde, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre, un accélérateur type sulfénamide et le durcisseur, sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### • Essais de compositions de caoutchouc

Six compositions de caoutchouc ont été préparées comme indiqué précédemment, cinq non conformes à l'invention (notées ci-après C.1 à C.5) et une conforme (C.6). Leurs formulations (en pce) et leurs propriétés ont été résumées dans le tableau 1 ci-après.

A l'exception de la composition témoin C.1, les compositions présentées dans ce tableau 1 n'engendrent pas la formation de formaldéhyde lors de la cuisson.

Les compositions C.2 à C.6 contiennent une résine époxyde et un durcisseur polyaminé en remplacement du couple résine formo-phénolique / durcisseur(s) HMT contenu dans la composition témoin conventionnelle C.1.

Les résultats en base du temps de grillage et de G^{∗}(2%) sont présentés 100 par rapport à la composition témoin C.1. Les résultats de plasticité Mooney sont présentés en valeur absolue.

**Tableau 1**

| Constituant | C.1 | C.2 | C.3 | C.4 | C.5 | C.6 |
|---|---|---|---|---|---|---|
| NR (1) | 100 | 100 | 100 | 100 | 100 | 100 |
| Noir de carbone (2) | 70 | 70 | 70 | 70 | 70 | 70 |
| ZnO (3) | 3 | 3 | 3 | 3 | 3 | 3 |
| 6PPD (4) | 2.5 | 2.5 | 2.5 | 2.5 | 2.5 | 2.5 |
| Acide stéarique (5) | 2 | 2 | 2 | 2 | 2 | 2 |
| Soufre | 3 | 3 | 3 | 3 | 3 | 3 |
| CBS (6) | 2 | 2 | 2 | 2 | 2 | 2 |
| Résine formoph. (7) | 12 | - | - | - | - | - |
| HMT (8) | 4 | - | - | - | - | - |
| Résine époxyde (9) | - | 12 | 12 | 12 | 12 | 12 |
| Durcisseur témoin (10) | - | 4 | - | - | - | - |
| Durcisseur témoin (11) | - | - | 4 | - | - | - |
| Durcisseur témoin (12) | - | - | - | 4 | - | - |
| Durcisseur témoin (13) | - | - | - | - | 4 | - |
| Durcisseur (14) | | | | | | 4 |
| Temps de grillage | 100 | 51 | 145 | 125 | 152 | 135 |
| Plasticité Mooney (UM) | 46 | 77 | 62 | 31 | 38 | 43 |
| G^{∗}(2%) retour à 40°C | 100 | 109 | 101 | 98 | 86 | 113 |

| | | | | | | |
|---|---|---|---|---|---|---|
| (1) Caoutchouc Naturel ; (2) Noir de carbone N326 (dénomination selon la norme ASTM D-1765) (3) Oxyde de zinc (grade industriel - société Umicore) (4) N-1,3-diméthylbutyl-N-phénylparaphénylènediamine (Santoflex 6-PPD de la société Flexsys) (5) Stéarine (« Pristerene 4931 » de la société Uniqema) (6) N-cyclohexyl-benzothiazyl sulphénamide(Santocure CBS de la société Flexsys) (7) Résine formophénolique novolac (« Peracit 4536K » de la société Perstorp) (8) Hexaméthylènetétramine (de la société Degussa) (9) Résine époxyde (« DEN 439 » de la société Uniqema) (10) 1,3bis(aminométhyl)cyclohexane (de la société Sigma-Aldrich) (11) metaphenylene diamine de la société Sigma-Aldrich (12) « Lonzacure MDEA » de la société Lonza (13) « Lonzacure MCDEA » de la société Lonza (14) triméthylène bis(4-aminobenzoate) (« Versalink 740 M » de la société Air Product) | | | | | | |

On note que l'utilisation d'une résine époxyde et d'un dérivé d'aminobenzoate répondant à la formule (I) dans la composition C.6 conforme à la présente invention permet d'obtenir une plasticité Mooney amélioré et un temps de grillage allongé par rapport au couple résine formo-phénolique / durcisseur(s) HMT de la composition témoin C.1

La composition conforme C.6 présente une rigidité améliorée sans dégrader les propriétés à cru (plasticité Mooney et temps de grillage), montrant que l'utilisation d'un dérivé d'aminobenzoate répondant à la formule (I) dans les compositions de l'invention permet d'obtenir des compositions de caoutchouc dont le compromis processabilité / rigidité est bien supérieur à celui d'une composition conventionnelle, ou de compositions comprenant d'autres durcisseurs aminés, non conformes à la présente invention.

Cet essai illustre des compositions de caoutchouc qui peuvent être utilisées en particulier dans des mélanges internes tels les nappes carcasse, les nappes sommet, les bourrages-tringle, les pieds sommets, les couches de découplage, la sous-couche de bande de roulement, notamment dans les nappes carcasses, les nappes sommet, les bourrages-tringle, les pieds sommets, les couches de découplage, la sous-couche de bande de roulement, zones nécessitant une forte rigidité à basse déformation.

## Revendications

1. Composition de caoutchouc à base d'au moins :
- un élastomère diénique,
- une charge renforçante,
- un système de réticulation,
- de 1 à 30 parties en poids pour cent parties en poids d'élastomère, pce, d'une résine époxyde, et
- de 0,5 à 15 pce d'un dérivé d'aminobenzoate répondant à la formule (I) : 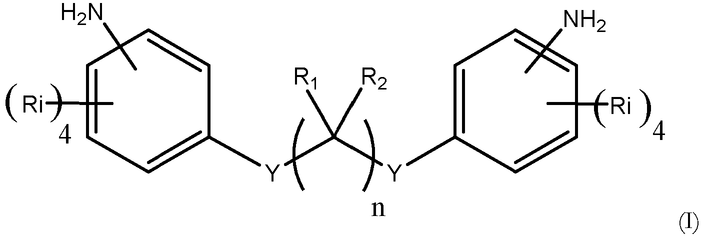 dans laquelle :
- n représente un entier allant de 1 à 5,
- Y représente une fonction ester,
- R₁ et R₂, identiques ou différents, sont choisis dans le groupe constitué par un atome d'hydrogène et un groupement méthyle, éthyle, propyle, butyle, isopropyle, isobutyle, terbutyle ou benzyle,
- les groupes Ri, identiques ou différents, sont choisis dans le groupe constitué par un atome d'hydrogène et les radicaux alkyles linéaires ou ramifiés en C₁-C₆.

2. Composition de caoutchouc selon la revendication 1, dans laquelle le dérivé d'aminobenzoate répond à la formule (II) ou (III) :

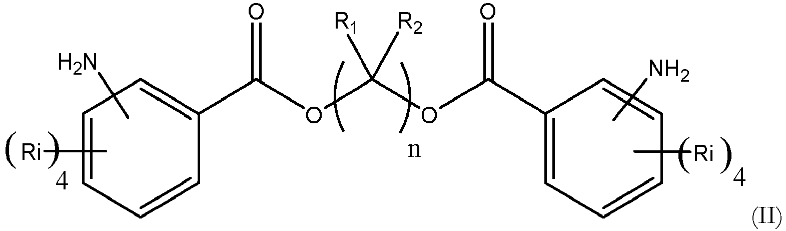

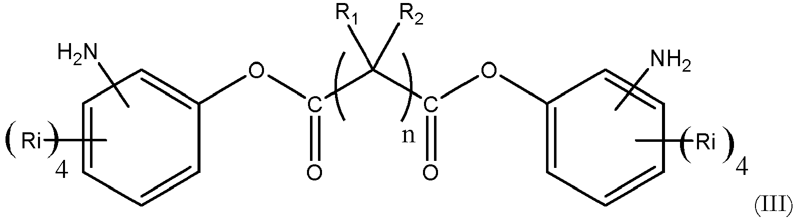

3. Composition de caoutchouc selon la revendication 1, dans laquelle le dérivé d'aminobenzoate répond à la formule (IV) :

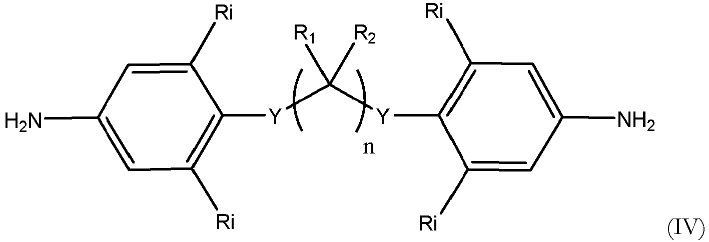

4. Composition de caoutchouc selon l'une quelconque des revendications 1 à 3, dans laquelle le dérivé d'aminobenzoate répond à la formule (V) ou (VI) :

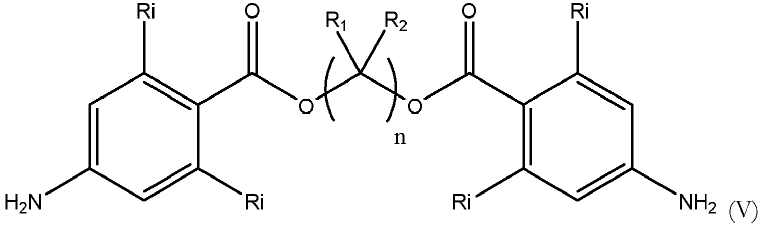

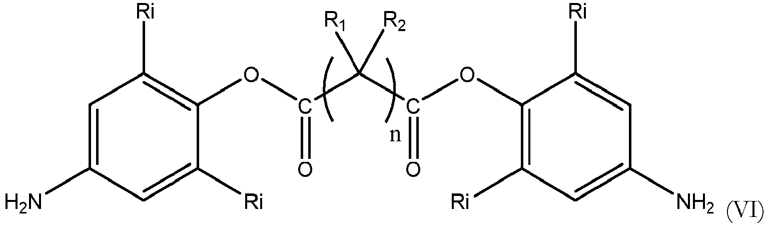

5. Composition de caoutchouc selon l'une quelconque des revendications 1 à 4, dans laquelle les radicaux alkyles linéaires ou ramifiés en C₁-C₆ des groupes Ri sont, indépendamment les uns des autres, choisis dans le groupe constitué par les radicaux méthyle, éthyle, propyle, isopropyle, isobutyle et butyle, de préférence dans le groupe constitué par les radicaux méthyle et éthyle.

6. Composition de caoutchouc selon l'une quelconque des revendications 1 à 4, dans laquelle tous les groupes Ri sont des atomes d'hydrogène.

7. Composition de caoutchouc selon l'une quelconque des revendications 1 à 6, dans laquelle n représente un entier allant de 2 à 4.

8. Composition de caoutchouc selon l'une quelconque des revendications 1 à 7, dans laquelle R₁ et R₂, identiques ou différents, sont choisis dans le groupe constitué par un atome d'hydrogène et un groupement méthyle ou éthyle.

9. Composition de caoutchouc selon l'une quelconque des revendications 1 à 8, dans laquelle R₁ et R₂ sont des atomes d'hydrogène.

10. Composition de caoutchouc selon l'une quelconque des revendications 1 à 9, dans laquelle le taux de dérivé d'aminobenzoate est compris dans un domaine allant de 1 à 10 pce, de préférence de 2 à 8 pce.

11. Composition de caoutchouc selon l'une quelconque des revendications 1 à 10, dans laquelle la résine époxyde est choisie parmi les résines époxydes aromatiques, époxydes alicycliques et époxydes aliphatiques.

12. Composition de caoutchouc selon la revendication 11, dans laquelle la résine époxyde est choisie parmi les résines époxydes novolaques crésol.

13. Composition de caoutchouc selon l'une quelconque des revendications 1 à 12, dans laquelle le taux de résine époxyde est compris entre 10 et 25 pce, de préférence entre 15 et 20 pce.

14. Article de caoutchouc fini ou semi-fini comportant une composition de caoutchouc selon l'une quelconque des revendications précédentes.

15. Pneumatique comportant une composition de caoutchouc selon l'une quelconque des revendications 1 à 13 ou un article de caoutchouc semi-fini selon la revendication 14.

## Patentansprüche

1. Kautschukzusammensetzung auf Basis von mindestens:
- einem Dienelastomer,
- einem verstärkenden Füllstoff,
- einem Vernetzungssystem,
- 1 bis 30 Gewichtsteilen pro hundert Gewichtsteile Elastomer, phe, eines Epoxidharzes und
- 0,5 bis 15 phe eines Aminobenzoesäureester-Derivats, das der Formel (I) entspricht: 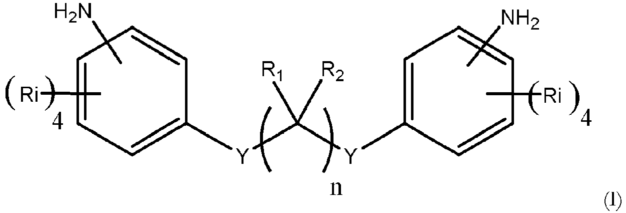 in der:
- n für eine ganze Zahl im Bereich von 1 bis 5 steht,
- Y für eine Esterfunktion steht,
- R₁ und R₂ gleich oder verschieden sind und aus der Gruppe bestehend aus einem Wasserstoffatom und einer Methyl-, Ethyl-, Propyl-, Butyl-, Isopropyl-, Isobutyl-, tert-Butyl oder Benzylgruppe ausgewählt sind,
- die Gruppen Ri gleich oder verschieden sind und aus der Gruppe bestehend aus einem Wasserstoffatom und linearen oder verzweigten C₁-C₆-Alkylresten ausgewählt sind.

2. Kautschukzusammensetzung nach Anspruch 1, wobei das Aminobenzoesäureester-Derivat der Formel (II) oder (III) entspricht:

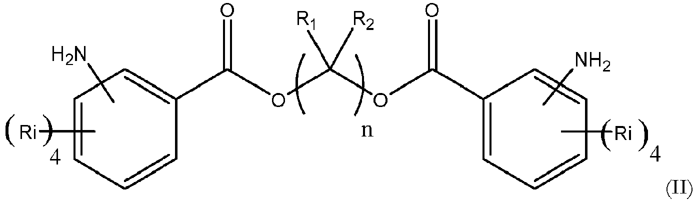

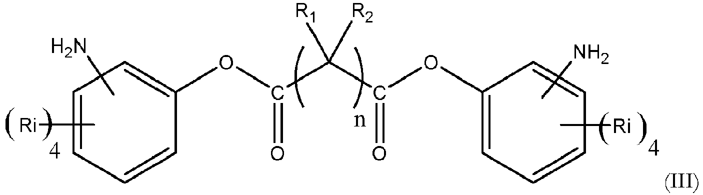

3. Kautschukzusammensetzung nach Anspruch 1, wobei das Aminobenzoesäureester-Derivat der Formel (IV) entspricht:

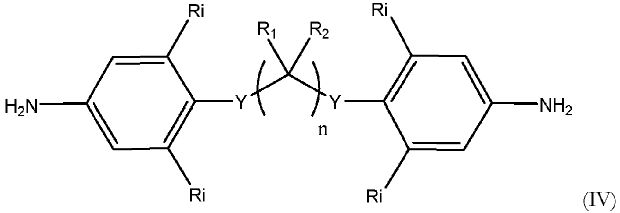

4. Kautschukzusammensetzung nach einem der Ansprüche 1 bis 3, wobei das Aminobenzoesäureester-Derivat der Formel (V) oder (VI) entspricht:

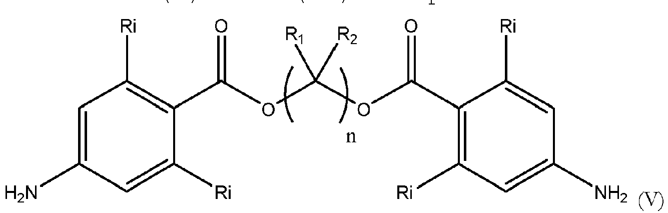

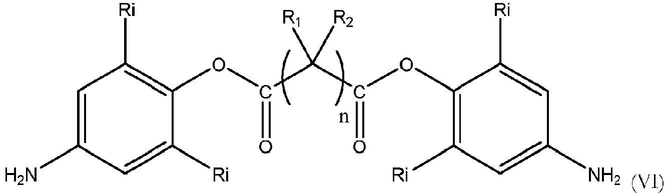

5. Kautschukzusammensetzung nach einem der Ansprüche 1 bis 4, wobei die linearen oder verzweigten C₁-C₆-Alkylreste der Gruppen Ri unabhängig voneinander aus der Gruppe bestehend aus Methyl-, Ethyl-, Propyl-, Isopropyl-, Isobutyl- und Butylresten ausgewählt sind.

6. Kautschukzusammensetzung nach einem der Ansprüche 1 bis 4, wobei alle Gruppen Ri Wasserstoffatome sind.

7. Kautschukzusammensetzung nach einem der Ansprüche 1 bis 6, wobei n für eine ganze Zahl im Bereich von 2 bis 4 steht.

8. Kautschukzusammensetzung nach einem der Ansprüche 1 bis 7, wobei R₁ und R₂ gleich oder verschieden sind und aus der Gruppe bestehend aus einem Wasserstoffatom und einer Methyl- oder Ethylgruppe ausgewählt sind.

9. Kautschukzusammensetzung nach einem der Ansprüche 1 bis 8, wobei R₁ und R₂ Wasserstoffatome sind.

10. Kautschukzusammensetzungen nach einem der Ansprüche 1 bis 9, wobei der Gehalt an Aminobenzoesäureester-Derivat in einem Bereich von 1 bis 10 phe, vorzugsweise von 2 bis 8 phe, liegt.

11. Kautschukzusammensetzung nach einem der Ansprüche 1 bis 10, wobei das Epoxidharz aus aromatischen, alicyclischen und aliphatischen Epoxidharzen ausgewählt ist.

12. Kautschukzusammensetzung nach Anspruch 11, wobei das Epoxidharz aus Epoxy-Kresol-Novolakharzen ausgewählt ist.

13. Kautschukzusammensetzung nach einem der Ansprüche 1 bis 12, wobei der Gehalt an Epoxidharz zwischen 10 und 25 phe, vorzugsweise zwischen 15 und 20 phe, liegt.

14. Kautschukerzeugnis oder -halbzeug, umfassend eine Kautschukzusammensetzung nach einem der vorhergehenden Ansprüche.

15. Reifen, umfassend eine Kautschukzusammensetzung nach einem der Ansprüche 1 bis 13 oder ein Kautschukhalbzeug nach Anspruch 14.

## Claims

1. Rubber composition based on at least:
- a diene elastomer,
- a reinforcing filler,
- a crosslinking system,
- from 1 to 30 parts by weight, per hundred parts by weight of elastomer, phr, of an epoxy resin, and
- from 0.5 to 15 phr of an aminobenzoate derivative corresponding to formula (I): 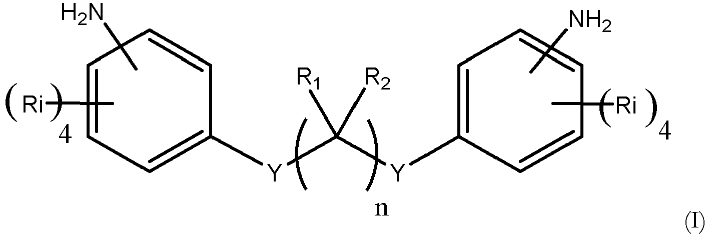 in which:
- n represents an integer ranging from 1 to 5,
- Y represents an ester function,
- R₁ and R₂, which may be identical or different, are selected from the group consisting of a hydrogen atom and a methyl, ethyl, propyl, butyl, isopropyl, isobutyl, tert-butyl or benzyl group,
- the Ri groups, which may be identical or different, are selected from the group consisting of a hydrogen atom and linear or branched C₁-C₆ alkyl radicals.

2. Rubber composition according to Claim 1, in which the aminobenzoate derivative corresponds to formula (II) or (III):

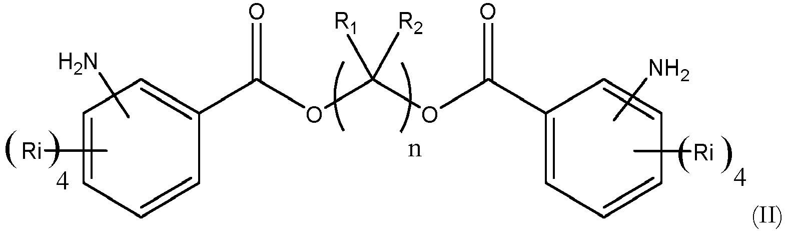

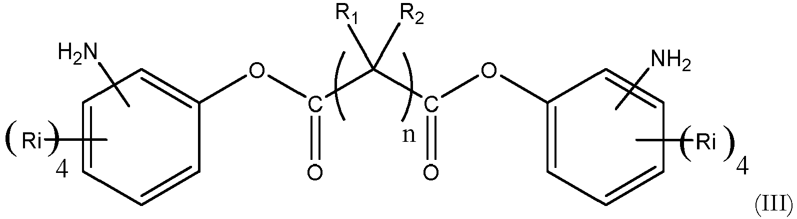

3. Rubber composition according to Claim 1, in which the aminobenzoate derivative corresponds to formula (IV):

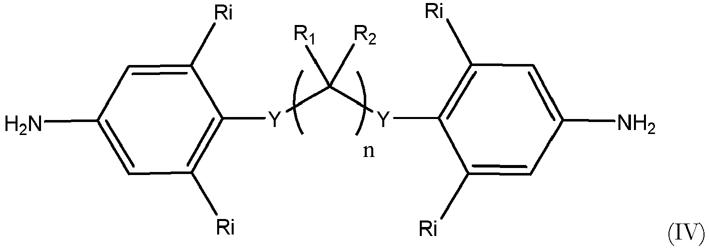

4. Rubber composition according to any one of Claims 1 to 3, in which the aminobenzoate derivative corresponds to the formula (V) or (VI):

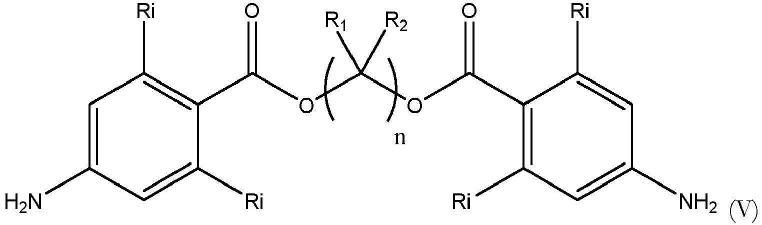

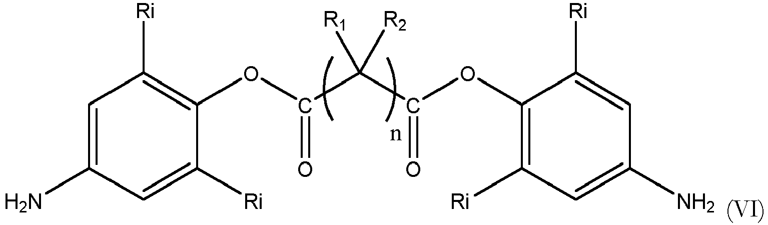

5. Rubber composition according to any one of Claims 1 to 4, in which the linear or branched C₁-C₆ alkyl radicals of the Ri groups are, independently of one another, selected from the group consisting of methyl, ethyl, propyl, isopropyl, isobutyl and butyl radicals, preferably from the group consisting of methyl and ethyl radicals.

6. Rubber composition according to any one of Claims 1 to 4, in which all of the Ri groups are hydrogen atoms.

7. Rubber composition according to any one of Claims 1 to 6, in which n represents an integer ranging from 2 to 4.

8. Rubber composition according to any one of Claims 1 to 7, in which R₁ and R₂, which may be identical or different, are selected from the group consisting of a hydrogen atom and a methyl or ethyl group.

9. Rubber composition according to any one of Claims 1 to 8, in which R₁ and R₂ are hydrogen atoms.

10. Rubber composition according to any one of Claims 1 to 9, in which the aminobenzoate derivative content is within a range extending from 1 to 10 phr, preferably from 2 to 8 phr.

11. Rubber composition according to any one of Claims 1 to 10, in which the epoxy resin is selected from aromatic epoxy, alicyclic epoxy and aliphatic epoxy resins.

12. Rubber composition according to Claim 11, in which the epoxy resin is selected from epoxy cresol novolac resins.

13. Rubber composition according to any one of Claims 1 to 12, in which the content of epoxy resin is between 10 and 25 phr, preferably between 15 and 20 phr.

14. Finished or semi-finished rubber article comprising a rubber composition according to any one of the preceding claims.

15. Tyre comprising a rubber composition according to any one of Claims 1 to 13 or a semi-finished rubber article according to Claim 14.
